**Europäisches Patentamt**

(19) **European Patent Office**

**Office européen des brevets**

(11) Publication number : **0 331 350 B1**

(12) # EUROPEAN PATENT SPECIFICATION

(45) Date of publication of patent specification :
**12.08.92 Bulletin 92/33**

(21) Application number : **89301765.7**

(22) Date of filing : **23.02.89**

(51) Int. Cl.⁵ : **C03B 37/06**

(54) **Blowing nozzle assembly for fibreizing material.**

(30) Priority : **29.02.88 US 161871**

(43) Date of publication of application :
**06.09.89 Bulletin 89/36**

(45) Publication of the grant of the patent :
**12.08.92 Bulletin 92/33**

(84) Designated Contracting States :
**DE FR GB IT SE**

(56) References cited :
**DE-B- 1 131 853**
**US-A- 3 283 039**
**US-A- 4 001 357**

(73) Proprietor : **THE BABCOCK & WILCOX**
**COMPANY**
**1010 Common Street, P.O. Box 60035**
**New Orleans, Louisiana 70160 (US)**

(72) Inventor : **Righi, Jamal**
**2312 Comet Circle, NW**
**North Canton Ohio 44720 (US)**

(74) Representative : **Purvis, William Michael**
**Cameron et al**
**D. Young & Co. 10 Staple Inn**
**London WC1V 7RD (GB)**

## Description

The invention relates to a blowing nozzle assembly for fibreizing material.

Such an assembly may be used for forming inorganic fibres of high tensile strength.

The manufacture of inorganic fibres typically requires two steps, viz., releasing a stream of molten inorganic material and subjecting the molten stream to some type of fibreizing means. There are two commercially known methods for fibreizing the molten stream of inorganic material - spinning and blowing. In the spinning method, fibreizing of the molten stream is achieved by means of rotating discs. The molten stream falls directly on the rotating discs and is fibreized thereby. In the blowing method, the molten stream is subjected to a high velocity blast of a gas, such as steam or air, from a blowing nozzle positioned adjacent the molten stream. The function of the blowing nozzle is to change the direction of motion of the molten stream from vertical to horizontal, breaking up the stream into globules which are subsequently attenuated into fibres, such as disclosed in patent specification US-A-2,743,136. The molten stream may come into contact with the body of the blowing nozzle, however, no physical contact is required in order to change the direction of the molten stream and to break up the stream into fibres.

Alternately, two blowing nozzles can be used, a primary nozzle and a secondary nozzle having an opening substantially parallel to the axis of the primary nozzle. The primary nozzle comprises a plurality of high velocity air streams emanating from a plurality of orifices provided therein. The secondary nozzle is a venturi-type nozzle producing very high air velocities to fibreize the molten material. In this case, raw ceramic materials are melted electrically in a furnace, and the melt is tapped from the furnance in the form of a continuous molten stream and/or droplets. The continuous molten stream and/or droplets is permitted to flow so as to be subjected to high velocity air streams from the primary nozzle which breaks the melt into fine ligaments which are drawn into the secondary nozzle wherein they undergo further high shearing and cooling rates to produce ceramic fibres. It has been found that the apparatus utilized for this process has some inherent disadvantages in that the amount of material which remains unfibreized is significant thus producing lower quality products. In addition, it has been further found that the impingement of the molten material on the entrance surface into the secondary nozzle causes the impinging melt to solidify in the form of flakes and globules which are not desirable. And lastly, the length of the fibres produced by this blowing apparatus is undesirably short causing the resulting fibrous material to have a low tensile strength which severely affects the handleability of material produced from the fibres.

Another method for blowing inorganic materials to produce fibrous material is disclosed in patent specification US-A-4,001,357 wherein a melt stream is passed through a Laval nozzle operated at high pressure so as to generate supersonic gas velocities. The nozzle velocities are selected so as to cause an abrupt temperature drop in the flow medium within the nozzle which causes the melt to solidify into fibres. The fibres produced by this apparatus have very short lengths (between 2 and 10 mm). The materials produced from short fibres are known to have a very low tensile strength and extremely poor handleability.

According to the invention there is provided a blowing nozzle assembly for fibreizing material comprising an entrance member having a bore therethrough with an inlet and an exit, the bore having a diameter decreasing transversely in an axial direction;
an elongate barrel member with a bore therethrough having an inlet and an outlet, the inlet in the barrel member being axially aligned with and adjacent to the exit of the entrance member with an annular gap provided therebetween; and a housing member interposed between the entrance member and the barrel member and axially aligning the bore in the entrance member with the bore in the barrel member, the housing member having means reciprocally engaging the entrance member and the barrel member together in an axial direction which provides for adjustment of the angular gap between the entrance member and the barrel member and the housing member further having means for introducing fibreizing medium thereinto;
characterised in that the inlet in the entrance member has a diameter of about 63.5 to 76.2mm; the continuous circumferential surface of he entrance member has a radius in axial cross-section of about 38.1mm; the exit of the bore in the entrance member has a diameter of about 50.8mm; the barrel member is about 457mm long with the bore in the barrel member being formed with an angle of divergence outwardly less than about 2 degrees; and the inlet of the barrel member a diameter of about 50.8mm to 57.2mm and the outlet of the barrel member has a diameter of about 76.2 to 82.6mm.

Such a blowing nozzle assembly can produce fibres that are both longer and have larger diameters than presently available so as to increase the tensile strength of the material produced therefrom, and to increase the percentage of molten material ultimately converted into fibres.

The entrance into the secondary nozzle thus has a unique shape and larger size minimizing the impingement of molten material thereon. In this manner, the formation of flakes and globules at the entrance way to the secondary nozzle can be minimized thus alleviating the problems associated with the incorporation of flakes in the end product. In addition, the barrel nozzle can have a longer barrel resulting in the complete solidification of the molten material therein so as to produce longer and thicker fibres. Thus, the resulting material produced from the fibres can have a higher tensile strength which improves the handleability thereof.

The invention is diagrammatically illustrated by way of example in the accompanying drawings, in which:-

Figure 1 is a cross-sectional view of a blowing nozzle assembly of previously proposed kind showing a primary nozzle and a secondary nozzle;

Figure 2 is an enlarged, partial cross-sectional view of an entrance disc utilized by the secondary nozzle in the blowing assembly of Figure 1;

Figure 3 is a cross-sectional view of a blowing nozzle assembly according to the invention showing a primary nozzle and a secondary nozzle thereof; and

Figure 4 is an enlarged, partial cross-sectional view of the entrance disc utilized by the secondary nozzle of Figure 3.

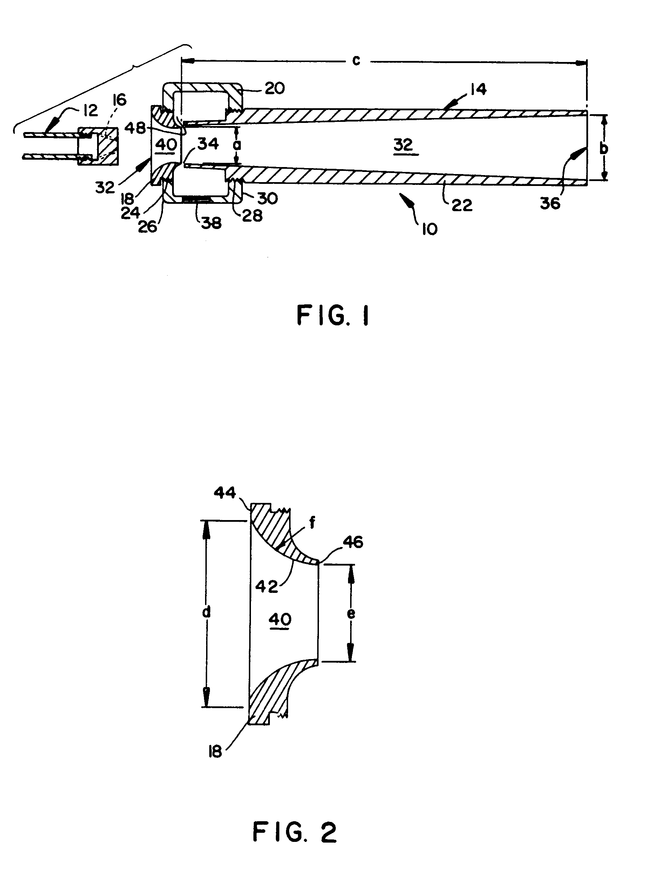

Referring to the drawings and firstly to Figure 1, apparatus 10 for fibreizing molten material includes a primary nozzle 12 and a secondary nozzle 14. The primary nozzle 12 has a plurality of orifices 16 and its exit end permitting a high velocity air stream to emanate from each of the orifices 16. Typically, the orifices 16 have a diameter of from 1 to 1.5 mm. The secondary nozzle 14 includes an entrance disc 18, a nozzle housing 20 and a nozzle barrel 22. The entrance disc 18 has threads 24 formed on a portion of the outer periphery thereof which engage complementary threads formed in a wall 26 of the nozzle housing 20. Similarly, the nozzle barrel 22 is provided with threads 28 on a portion of the outer surface thereof which engage complementary threads provided in a wall 30 which is disposed opposite to the wall 26 of the nozzle housing 20. It should be noted that the complementary threads in the walls 26 and 30 of housing 20 are positioned so that the entrance disc 18 and the nozzle barrel 22 are aligned and their axes are coincident. In this manner, the entrance disc 18 will direct the fibreized material into a bore 32 of nozzle barrel 22. The inner diameter $a$ of an inlet 34 to the nozzle barrel 22 is typically between 25.4 to 31.8 mm (1 to 1.25 inches) whereas the inner diameter $b$ of an outlet 36 from the barrel 22 is generally between 38.1 to 50.8 mm (1.25 to 2 inches) resulting in the nozzle barrel bore 32 being tapered outwardly from the nozzle housing 20. The overall length $c$ of the nozzle barrel 22 is usually approximately 330.2 mm (13 inches) permitting elongation of the fibres therein. An aperture 38 is provided in the nozzle housing 20 for the introduction of fibreizing medium into the secondary nozzle 14.

Referring to Figure 2, it can be seen that the entrance disc 18 has a bore 40 therethrough defined by a continuous circumferential surface 42 from an outer face 44 of the disc to an opposite annular end 46 thereof. The diameter $d$ of the inlet to the bore 40 is generally approximately 50.8 mm (2 inches) whereas the diameter $e$ of the outlet from the bore is typically between 25.4 to 31.8 mm (1 to 1.25 inches) so as to be compatible with the inner diameter $a$ of the inlet 34 to the nozzle barrel 22. The continuous circumferential surface 42 defining the bore 40 has a relatively small radius $f$ (in axial cross-section) of approximately 22.2 mm (0.875 inch). The bore 40 defined by the continuous circumferential surface 42 has a decreasing transverse diameter in the axial direction throughout its entire axial length from the face 44 of the disc 18 to the annular end 46 thereof. The annular end 46 of the entrance disc 18 is adjacent to the inlet 34 to the nozzle barrel 22, with a small annular gap 48 therebetween. The outwardly directed taper of the nozzle barrel bore 32 allows the passage of the fibreized material therethrough.

Operationally, a continuous molten stream and/or droplets of material to be fibreized is permitted to flow vertically between the primary nozzle 12 and the secondary nozzle 14 so as to intercept the plurality of high velocity air streams emanating from the orifices 16 within the primary nozzle 12. These high velocity air streams break the molten stream and/or droplets into fine ligaments which are drawn into the secondary nozzle 14 wherein they contact the fibreizing medium introduced into the nozzle housing 20 via the aperture 38 therein and undergo high shearing and cooling rates to produce elongate ceramic fibres. It has been found that impingement of the molten stream and/or droplets on the entrance disc 18 of the secondary nozzle 14 causes the impinging melt to solidify in the form of flakes and/or globules on the entrance disc 18. In addition, it has been found that use of this prior art apparatus 10 results in a significant percentage of the molten stream and/or droplets remaining unfibreized thus producing lower quality products. It has been further found that the length of the fibres produced by this prior art apparatus 10 is undesirably short resulting in the fibrous material produced therefrom having a low tensile strength which severely affects its handleability. The fibres produced by this apparatus have an average length of about 101.6 mm (4 inches) and an average diameter of the fibre of about 1.4 micrometres.

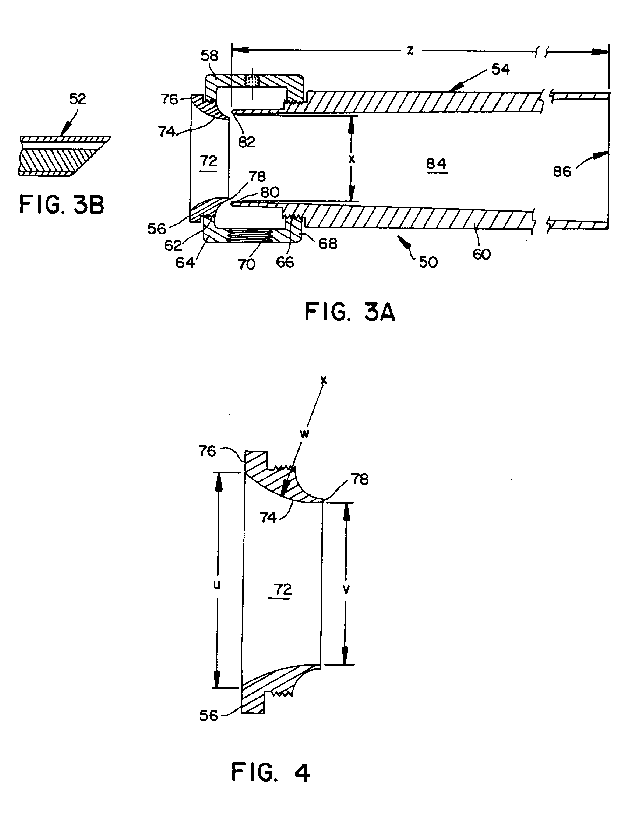

Referring to Figures 3 and 4, a blowing nozzle assembly 50 in accordance with the invention includes a primary nozzle 52 and a secondary nozzle 54. The primary nozzle 52 is of conventional form. The secondary nozzle 54 includes an entrance disc 56, a nozzle housing 58 and a nozzle barrel 60. The entrance disc 56 has threads 62 formed on a portion of the outer periphery thereof which engage complementary threads formed in a wall 64 of the nozzle housing 58. Similarly, the nozzle barrel 60 is provided with threads 66 on a portion of the outer surface thereof which engage complementary threads provided in a wall 68 which is oppositely disposed to the wall 64 of the nozzle housing 58. The complementary threads in the walls 64 and 68 of the housing 58 are positioned so that the entrance disc 56 and the nozzle barrel 60 are aligned and their axes are coincident. The nozzle housing 58 is also provided with an aperture 70 for the introduction of fibreizing medium into the secondary nozzle 54.

The entrance disc 56 is of a unique design since a bore 72 therethrough has a substantially greater diameter than the bore 40 in the secondary nozzle 14 of previously proposed kind and is defined by a continuous circumferential surface 74 having a radius (in axial cross-section) that is substantially greater than that used in the prior art. For example, the diameter $\underline{u}$ of the inlet to the bore 72 is generally between 63.5 to 76.2 mm (2.5 to 3 inches) in contrast to approximately 50.8 mm (2 inches) for the diameter $\underline{d}$; the diameter $\underline{v}$ of the outlet from the bore is typically approximately 50.8 mm (2 inches) in contrast to 22.4 to 31.8 mm (1 to 1.25 inches) for the diameter $\underline{e}$; and the radius $\underline{w}$ (in axial cross-section) of the continuous circumferential surface is generally approximately 38.8 mm (1. 5 inches) in contrast to 22.2 mm (0.875 inches) for the radius $\underline{f}$. The foregoing increases in the diameter of the bore 72 and in the radius of the continuous circumferential surface 72 increase suction into the secondary nozzle 54 and improve melt break-up into ligaments. The bore 72 defined by the continuous circumferential surface 74 has a decreasing transverse diameter in the axial direction throughout its entire axial length from a face 76 to an annular end 78 of the entrance disc 56. The annular end 78 of the entrance disc 56 is adjacent an inlet 80 to the nozzle barrel 60 with a small annular gap 82 therebetween. As in the previously proposed apparatus, a bore 84 within the nozzle barrel 60 is tapered outwardly from the nozzle housing 58 allowing the passage of fibreized material therethrough, however, the axial length of the nozzle barrel 60 and the diameter of the nozzle bore are substantially greater than corresponding measurements of the nozzle barrel 22. For example, the inner diameter $\underline{x}$ of the inlet 80 to the nozzle barrel 60 is typically between 50.8 to 57.2 mm (2 to 2.25 inches) in contrast to 25.4 to 31.8 mm (1 to 1.25 inches) for the diameter $\underline{a}$; the inner diameter $\underline{y}$ of an outlet 86 from the barrel is generally between 76.2 to 82.6 mm (3 to 3.25 inches) in contrast to 38.1 to 50.8 (1.5 to 2 inches) for the diameter $\underline{b}$; and the length $\underline{z}$ of the barrel is approximately 457.2 mm (18 inches) in contrast to 330.2 mm (13 inches) for the length $\underline{c}$. The foregoing increases in the diameter of the bore within the nozzle barrel and the overall length of the nozzle barrel result in greater elongation of the fibres as they pass therethrough.

Operationally, the primary nozzle 52 is a jet-type nozzle which achieves high air velocities. The air pressure applied to the primary nozzle 52 and the flow rate therethrough are regulated. The diameter of the air jet formed by the primary nozzle 52 is large enough relative to the diameter of the melt stream passing adjacent the exit of the primary nozzle 52 for the melt stream to be completely surrounded by a high velocity shear layer. This shear layer induces the break up of the melt stream which forms the initial fibres.

Regulated high pressure air is introduced into the secondary nozzle via the aperture 70 in the nozzle housing 58. This high pressure air forms a supersonic shear layer emanating from the annular gap 82 formed between the inlet 80 to the nozzle barrel 60 and the annular end 78 of the entrance disc 56. This shear layer is sustained while it expands until it exits from the nozzle barrel 60. The angle of divergence of the bore 84 through the nozzle barrel 60 is critical and is kept below 2°. The size of the annular gap 82 formed between the annular end 78 of the entrance disc 56 and the inlet 80 to the nozzle barrel 60 can be set to achieve the desired fibreization conditions. It has been found that the best operating air pressures are approximately $5.17 \times 10^5$ Pa (75 psig) for the primary nozzle 52 and $5.17 \times 10^5$ to $6.55 \times 10^5$ Pa (75 to 95 psig) for the secondary nozzle 54. The optimum annular gap 82 between the annular end 78 of the entrance disc 56 and the inlet 80 to the nozzle barrel 60 is achieved by first screwing in the nozzle barrel 60 until its inlet 80 is flush with the annular end 78 of the disc 56 and then turning the barrel 2.5 to 3 threads leaving an annular gap of about 0.762 mm (0.03 inches) therebetween. It has been further found that the optimum spacing between the primary nozzle 52 and the secondary nozzle 54 is approximately 50.8 mm (2 inches) with the melt stream midway between the nozzles.

The flow of the supersonic shear layer within the secondary nozzle 54 creates a vacuum at the inlet to the entrance disc 56. This vacuum then produces a suctioning effect on the melt stream causing the molten material to be drawn into the interior of the secondary nozzle 54. The theory of liquid break up in an air blast, such as a supersonic shear layer of air, is well known and the mechanics for liquid droplets break up are known to depend on the liquid melt properties, such as viscosity and surface tension, and will not be discussed herein. The foregoing apparatus 50 is operated in a manner that maximizes molten material break up and provides sufficient energy from the air utilized by the primary nozzle 52 and the secondary nozzle 54 to shear the melt into fine fibres, which are subsequently elongated while passing through the nozzle barrel 60.

An assembly according to the invention can provide several advantages over previously proposed apparatus. For example, the fibres produced can be both longer and of larger diameter. There is no standard method for measuring the fibre length. Normally, a bulk sample is taken and separated gently until individual fibres are observed. Using this method, the fibres produced by an assembly according to the invention measured in excess of 334.8 mm (12 inches) in length. The average diameter of the fibre was about 1.9 to 2.2 micrometres.

Material produced from these longer, larger diameter fibres can have a higher tensile strength increasing the handleability of same. In addition, because of the unique configuration of the bore 72 within the entrance disc 56, it has been found that impingement of molten material on the disc 56 is minimized, thus reducing the production of flakes and/or globules thereon. In addition, it has been found that the design of the bore 72 within the entrance disc 56 can minimize sticking of molten material on the disc, thereby reducing the risk of plugging the entrance to the secondary nozzle 54 with accumulated melt. it has been further found that the design can minimize impingement of fibres on the interior of the nozzle barrel 60. This, in turn, can reduce erosion of the barrel and increase the life thereof. Also, the molten stream tends not to come into contact with the blowing nozzle which would substantially reduce the life of same.

A nozzle according to the invention has been tested with Kaowool (50 percent alumina and 50 percent silica) and with a salt mixture, it should be noted that the apparatus can be used in the production of fibres from numerous materials such as other alumina-silica compositions, glasses and metals. In addition, it should be noted that even though the use of a nozzle assembly according to the invention has been discussed using a primary nozzle mounted in the horizontal direction, the use of such a nozzle is not necessary and the secondary nozzle can be utilized alone in a vertical direction without adversely affecting results. And lastly, even though the invention has been described using compressed air as the fibreizing medium, other gases or vapours could be used as the medium without adversely affecting the production of the fibreized material.

## Claims

1. A blowing nozzle assembly (54) for fibreizing material comprising an entrance member (56) having a bore (72) therethrough with an inlet (76) and an exit (78), the bore having a diameter decreasing (U to V) transversely in an axial direction; an elongate barrel member (60) with a bore (84) therethrough having an inlet (80) and an outlet (86), the inlet (80) in the barrel member (60) being axially aligned with and adjacent to the exit (78) of the entrance member (56) with an annular gap (82) provided therebetween; and a housing member (58) interposed between the entrance member (56) and the barrel member (60) and axially aligning the bore (72) in the entrance member (56) with the bore (84) in the barrel member (60), the housing member (58) having means reciprocally engaging the entrance member (56) and the barrel member (60) together in an axial direction which provides for adjustment of the annular gap (82) between the entrance member (56) and the barrel member (60) and the housing member (58) further having means (70) for introducing fibreizing medium thereinto;

characterised in that the inlet (76) in the entrance member (56) has a diameter of about 63.5 to 76.2mm; the continuous circumferential surface (74) of the entrance member has a radius (W) in axial cross-section of about 38.1mm; the exit (78) of the bore (72) in the entrance member has a diameter of about 50.8mm; the barrel member (60) is about 457mm long with the bore (84) in the barrel member (60) being formed with an angle of divergence outwardly less than about 2 degrees; and the inlet (80) of the barrel member (60) has a diameter of about 50.8mm to 57.2mm and the outlet (86) of the barrel member (60) has a diameter of about 76.2 to 82.6mm.

2. A blowing nozzle assembly according to claim 1, wherein the bore (72) in the entrance member (56) is axially aligned with the bore (84) in the barrel member (60) in a horizontal direction.

3. A blowing nozzle assembly according to claim 1, wherein the bore (72) in the entrance member (56) is axially aligned with the bore (84) in the barrel member (60) in a vertical direction.

4. A blowing nozzle assembly according to claim 1, including a primary nozzle (52) for breaking melt with high air velocities and spaced about 50.8 from the entrance member (56).

## Patentansprüche

1. Blasdüsenaufbau (54) zerfaserndes bzw. ausfaserndes Material, wobei der Aufbau ein Eingangsteil (56) mit einer Bohrung (72) dahindurch mit Einlaß (76) und einem Auslaß aufweist, wobei die Bohrung einen Durchmesser hat, der quer in einer Axialrichtung abnimmt (U bis V), ein längliches Walzenteil (60) aufweist mit einer Bohrung (84) dahindurch, welches einen Einlaß (80) und einen Auslaß (86) hat, wobei der Einlaß (80) in das Walzenteil (60) in axialer Richtung mit dem Ausgang (78) des Eingangsteiles (56) und unmittelbar neben diesem ausgerichtet ist mit einem ringförmigen Spalt (82), der dazwischen vorgesehen ist, und ein Gehäuseteil (58) aufweist, welches zwischen dem Eingangsteil (56) und dem Walzenteil (60) angeordnet ist und die Bohrung (72) in dem Eingangsteil (56) mit der Bohrung (84) in dem Walzenteil (60) in axialer Richtung ausrichtet, wobei das Gehäuseteil (58) Einrichtungen hat, die wechselweise mit dem Eingangsteil (56) und dem Walzenteil (60) gemeinsam in axialer Richtung in Eingriff treten, was die Einstellung des ringförmigen Spaltes (82) zwischen dem Eingangsteil (56) und dem Walzenteil (60) gewährleistet, und wobei das Gehäuseteil (58) weiterhin eine Einrichtung (70) hat, um das zerfasernde Medium dahinein einzuführen,

dadurch gekennzeichnet, daß der Einlaß (76) in dem Eingangsteil (56) einen Durchmesser von etwa 63.5 bis 76.2mm hat, daß die durchgehend umlaufende Oberfläche (74) des Eingangsteiles in einem axialen Querschnitt einen Radius (W) von etwa 38.1mm hat, daß der Ausgang (78) der Bohrung (72) in dem Eingangsteil einen Durchmesser von etwa 50.8mm hat, daß das Walzenteil (60) etwa 457mm lang ist, wobei die Bohrung (84) in dem Walzenteil (60) mit einem Divergenzwinkel nach außen ausgebildet ist, der weniger als 2° beträgt, und daß der Einlaß (80) des Walzenteiles (60) einen Durchmesser von etwa 50.8 bis 57.2mm und der Auslaß (86) des Walzenteils (60) einen Durchmesser von etwa 76.2 bis 82.6mm hat.

2. Blasdüse nach Anspruch 1, wobei die Bohrung (72) in dem Eingangsteil (56) in einer horizontalen Richtung axial mit der Bohrung (84) in dem Walzenteil (60) ausgerichtet ist.

3. Blasdüsenaufbau nach Anspruch 1, wobei die Bohrung (72) in dem Eingangsteil (56) in vertikaler Richtung axial mit der Bohrung (84) in dem Walzenteil (60) ausgerichtet ist.

4. Blasdüsenaufbau nach Anspruch 1, einschließlich einer Primärdüse (52), um eine Schmelze mit hohen Luftgeschwindigkeiten aufzubrechen, wobei die Düse etwa 50.8mm von dem Eingangsteil (56) beabstandet ist.

## Revendications

1. Busette de soufflage (54) pour effilocher une matière comprenant un organe d'entrée (56) traverse par un alésage (72) avec une entrée (76) et une sortie (78), l'alésage présentant un diamètre allant en diminuant (u à v) transversalement dans une direction axiale;
un cylindre allongé (60) traversé par un alésage (84) comportant une entrée (80) et une sortie (86), l'entrée (80) dans le cylindre (60) étant alignée axialement avec la sortie (78) de l'organe d'entrée (56) et adjacente à cette sortie avec un espace angulaire (82) formé entre elles; et un boîtier (58) disposé entre l'entrée (56) et le cylindre (60) et alignant axialement l'alésage (72) dans l'entrée (56) avec l'alésage (84) dans le cylindre (60), le boîtier (58) comportant un moyen engageant en va-et-vient l'entrée (56) et le cylindre (60) dans une direction axiale qui permet un ajustement de l'espace angulaire (82) entre l'entrée (56) et le cylindre (60) et le boîtier (58) comportant en outre un mogen (70) pour introduire un moyen d'effilochage en son sein;

caractérisée en ce que l'entrée (76) dans l'organe d'entrée (56) a un diamètre compris entre 63.5 et 76.2mm environ; la surface circonférentielle continue (74) de l'organe d'entrée a un rayon (w) en section transversale axiale d'environ 38mm; la sortie (78) de l'alésage (72) dans l'organe d'entrée a un diamètre d'environ 50.8mm; le cylindre (60) fait environ 457 mm de longueur avec l'alésage (84) dans le cylindre (60) étant formé avec un angle de divergence vers l'extérieur inférieur à 2 degrés environ; et l'entrée (80) du cylindre (60) a un diamètre de 50.8 à 57.2mm environ et la sortie (86) du cylindre (60) a un diamètre de 76.2 à 82.6mm environ.

2. Busette de soufflage selon la revendication 1, dans laquelle l'alésage (72) dans l'organe d'entrée (56) est aligné axialement avec l'alésage (84) dans le cylindre (60) dans une direction horizontale.

3. Busette de soufflage selon la revendication 1, dans laquelle l'alésage (72) dans l'organe d'entrée (56) est aligné axialement avec l'alésage (84) dans le cylindre (60) dans une direction verticale.

4. Busette de soufflage selon la revendication 1, comprenant une busette primaire (52) pour rompre une matière en fusion avec des vitesses d'air élevées et espacée de 50.8mm environ de l'organe d'entrée (56).

FIG. 1

FIG. 2

FIG. 3B

FIG. 3A

FIG. 4